(19) **Europäisches Patentamt / European Patent Office / Office européen des brevets**

(11)  **EP 2 420 939 B1**

(12)  **EUROPEAN PATENT SPECIFICATION**

(45) Date of publication and mention
of the grant of the patent:
**04.03.2020  Bulletin 2020/10**

(21) Application number: **11186110.0**

(22) Date of filing: **13.04.2005**

(51) Int Cl.:
**G06F 16/25** *(2019.01)*        **G06F 16/21** *(2019.01)*

(54) **System and method for a virtual content repository**

System und Verfahren für eine virtuelle Inhaltsquelle

Système et procédé pour un référentiel au contenu virtuel

(84) Designated Contracting States:
**AT BE BG CH CY CZ DE DK EE ES FI FR GB GR HU IE IS IT LI LT LU MC NL PL PT RO SE SI SK TR**

(30) Priority:
| | |
|---|---|
| 13.04.2004 | US 561819 P |
| 13.04.2004 | US 561782 P |
| 13.04.2004 | US 561778 P |
| 13.04.2004 | US 561796 P |
| 13.04.2004 | US 561785 P |
| 13.04.2004 | US 561780 P |
| 13.04.2004 | US 561646 P |
| 13.04.2004 | US 561648 P |
| 13.04.2004 | US 561818 P |
| 13.04.2004 | US 561759 P |
| 13.04.2004 | US 561783 P |
| 13.04.2004 | US 561799 P |
| 13.04.2004 | US 561647 P |
| 04.08.2004 | US 991099 |
| 10.08.2004 | US 915505 |
| 10.08.2004 | US 915506 |
| 10.08.2004 | US 915013 |
| 10.08.2004 | US 915008 |
| 10.08.2004 | US 915521 |
| 10.08.2004 | US 915033 |
| 10.08.2004 | US 915057 |
| 10.08.2004 | US 915194 |
| 10.08.2004 | US 915504 |
| 10.08.2004 | US 915032 |
| 01.11.2004 | US 911287 |
| 01.11.2004 | US 910233 |
| 01.11.2004 | US 911203 |

(43) Date of publication of application:
**22.02.2012  Bulletin 2012/08**

(62) Document number(s) of the earlier application(s) in accordance with Art. 76 EPC:
**05733884.0 / 1 735 692**

(73) Proprietor: **ORACLE INTERNATIONAL CORPORATION**
**Redwood Shores CA 94065 (US)**

(72) Inventors:
- **McCauley, Rodney**
**Loveland, CO 80537 (US)**
- **Owen, James**
**Evergreen, CO 80439 (US)**
- **Patadia, Jalpesh**
**Boulder, CO 80305 (US)**
- **Possner, Brad**
**Erie, CO 80516 (US)**
- **Toussaint, Alexander**
**Broomfield, CO 80021 (US)**
- **Bales, Christopher E**
**Boulder, CO 80303 (US)**

(74) Representative: **D Young & Co LLP**
**120 Holborn**
**London EC1N 2DY (GB)**

(56) References cited:
**WO-A-00/22547      US-A- 5 047 918**

- **SCHONHOFF M ET AL: "Version propagation in federated database systems*", DATABASE ENGINEERING & APPLICATIONS, 2001 INTERNATIONAL SYMPOSIUM ON. JUL. 16-18, 2001, PISCATAWAY, NJ, USA,IEEE, 16 July 2001 (2001-07-16), pages 189-198, XP010554381, ISBN: 978-0-7695-1140-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE DISCLOSURE

The present invention disclosure relates to content management, and in particular, versioning content and providing definable content lifecycles.

BACKGROUND

Content repositories manage and provide access to large data stores such as a newspaper archives, advertisements, inventories, image collections, etc. A content repository can be a key component of a web application such as a portal, which must quickly serve up different types of content in response to user interaction. However, difficulties can arise when trying to integrate more than one vendor's content repository. Each may have its own proprietary application program interface and content services (e.g., conventions for searching and manipulating content, versioning, lifecycles, and data formats). Furthermore, each time a repository is added to an application, the application software must be modified to accommodate these differences. What is needed is a coherent system and method for interacting with disparate repositories and for providing a uniform set of content services across all repositories, including those that lack such services. The article SCHONHOFF M ET AL: "Version propagation in federated database systems*",DATABASE ENGINEERING & APPLICATIONS, 2001 INTERNATIONAL SYMPOSIUM ON. JUL. 16-18, 2001, PISCATAWAY, NJ, USA,IEEE, 16 July 2001 (2001-07-16), pages 189-198, XP010554381,ISBN: 978-0-7695-1140-5, discloses a federated database for engineering applications providing version management of products.

BRIEF DESCRIPTION OF THE DRAWINGS

**Figure 1** is an exemplary illustration of functional system layers in various embodiments of the invention.
**Figure 2** is an exemplary illustration of a lifecycle in various embodiments of the invention.
**Figure 3** is an exemplary illustration of an external scenario that invokes a lifecycle in various embodiments.
**Figure 4** is an exemplary user interface in various embodiments of the invention.
**Figure 5** is an exemplary illustration of objects/interfaces that can be used in connecting a repository to a VCR in various embodiments of the invention.
**Figure 6** is an exemplary illustration of objects/interfaces that can be used as service model in various embodiments of the invention.
**Figure 7** is an exemplary illustration of content creation while VCR content services are disabled in accordance to various embodiments of the invention.
**Figure 8** is an exemplary illustration of content creation while VCR content services are enabled in accordance to various embodiments of the invention.
**Figure 9** is an exemplary illustration of modifying a node in the VCR while content services are enabled in accordance to various embodiments of the invention.
**Figure 10** is an exemplary illustration of publishing a node in the VCR while content services are enabled in accordance to various embodiments of the invention.
**Figure 11** is an exemplary illustration of retiring a node in the VCR while content services are enabled in accordance to various embodiments of the invention.

DETAILED DESCRIPTION

Aspects of the invention are illustrated by way of example and not by way of limitation in the figures of the accompanying drawings in which like references indicate similar elements. It should be noted that references to "an", "one" and "various" embodiments in this disclosure are not necessarily to the same embodiment, and such references mean at least one. If the following description, numerous specific details are set forth to provide a thorough description of the invention. However, it will be apparent to one skilled in the art that the invention may be practiced without these sp ecific details. In other instances, well-known features have not been described in detail so as not to obscure the invention.

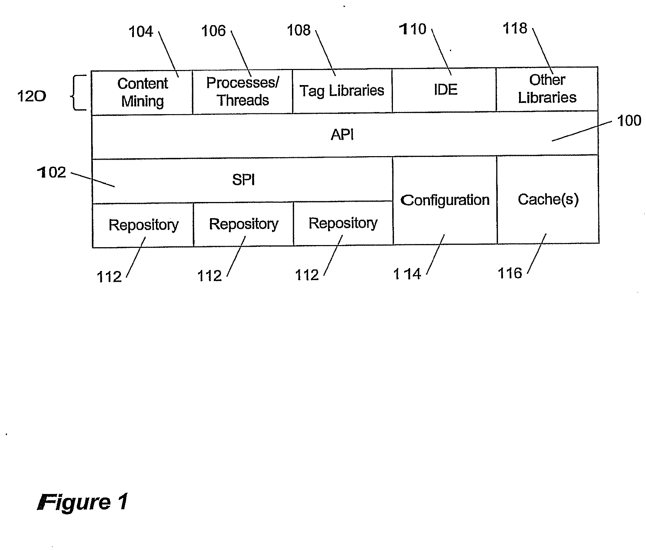

**Figure 1** is an exemplary illustration of functional system layers in various embodiments of the invention. Although this diagram depicts components as logically separate, such depiction is merely for illustrative purposes. It will be apparent to those skilled in the art that the components portrayed in this figure can be arbitrarily combined or divided into separate software, firmware and/or hardware. Furthermore, it will also be apparent to those skilled in the art that such components, regardless of how they are combined or divided, can execute on the same computing device or can be distributed among different computing devices connected by one or more networks or other suitable communication means.

A content repository **112** represents a searchable data store. Such systems can relate structured content and unstructured content (e.g., digitally scanned paper documents, Extensible Markup Language, Portable Document Format, Hypertext Markup Language, electronic mail, images, video and audio streams, raw binary data, etc.) into a searchable corpus. Content repositories can be coupled to or integrated with content management systems. Content management systems can provide for content life cycle management, versioning, content review and approval, automatic content classification, event-driven content processing, process tracking and content delivery to other systems. By way of illustration, if a user fills out a loan application on a. web portal, the portal can forward the application to a content repository which., in turn, can contact a bank system, receive notification of loan approval, update the loan application in the repository and notify the user by rendering the approval information in a format appropriate for the web portal.

A virtual or federated content repository (hereinafter referred to as "VCR") is a logical representation of one or more individual content repositories such that they appear and behave as a single content repository from the standpoint of application layer **120.** The VCR can also add content services to repositories that natively lack them. In various embodiments and by way of illustration, this can be accomplished in part by use of an API (application program interface) **100** and an SPI (service provider interface) **102.** An API describes how entities in the application layer can interface with some program logic or functionality. The application layer can include applications (and subdivisions thereof) that utilize the API, such as processes, threads, servlets, portlets, objects, libraries, and other suitable application components. An SPI describes how a service provider (e.g., a content repository, a content management system) can be integrated into a system of some kind. The SPI isolates direct interaction with repositories from the API. In various embodiments, this can be accomplished at run-time wherein the API library dynamically links to or loads the SPI library. In another embodiment, the SPI can be part of a server process such that the API and the SPI can communicate over a network. The SPI can communicate with the repositories using any number of means including, but not limited to, shared memory, remote procedure calls and/or via one or more intermediate server processes.

API's and SPI's can be specified as a collection of classes/interfaces, data structures and/or methods/functions that work together to provide a programmatic means through which VCR service(s) can be accessed and utilized. By way of illustration, APIs and SPIs can be specified in an object-oriented programming language, such as Java™ (available from Sun Microsystems, Inc. of Mountain View, California) and C# (available from Microsoft Corp. of Redmond, Washington). The API and SPI can be exposed in a number of ways, including but not limited to static libraries, dynamic link libraries, distributed objects, servers, class/interface instances, and other suitable means.

In various embodiments, the API presents a unified view of all repositories to the application layer such that navigation, CRUD operations (create, read, update, delete), versioning, lifecycles, and searching operations initiated from the application layer operate on the repositories as though they were one. Repositories that implement the SPI can "plug into" the VCR. The SPI includes a set of interfaces and services that support API functionality at the repository level. The API and SPI share a content model that represents the combined content of all repositories as a hierarchical namespace of nodes. Given a node *N*, nodes that are hierarchically inferior to *N* are referred to as children of *N*, whereas nodes that are hierarchically superior to *N* are referred to as parents of *N*. The top-most level of the hierarchy is termed the federated root. There is no limit to the depth of the hierarchy. In various embodiments, repositories are children of the federated root. Each repository can itself have children.

By way of illustration, content mining facilities **104,** processes/threads **106,** tag libraries **108,** integrated development environments (IDEs) **110,** and other libraries **118** can all utilize the API to interact with a VCR. An IDE can provide the ability for a user to interactively build lifecycles and/or content views. Content mining facilities can include services for automatically extracting content from the VCR based on parameters. Java ServerPages™ tag libraries enable portals to interact with the VCR and surface its content on web pages. (Java ServerPages™ is available from Sun Microsystems, Inc.) In addition, it will be apparent to those of skill in the art that many other types of applications and software components utilize the API and are, as such, fully within the scope of the present disclosure.

n various embodiments, the API can include optimizations to improve the performance of interacting with the VCR. One or more caches **116** can be used to buffer search results and/or recently accessed nodes. In various embodiments, a cache can include a node cache and/or a binary cache. A node cache can be used to provide fast access to recently accessed nodes whereas a binary cache can be used to provide fast access to the content/data associated with each node in a node cache. The API can also provide a configuration facility **114** to enable applications, tools and libraries to configure caches and the VCR. In various embodiments, this facility can be implemented as a Java Management Extension (available from Sun Microsystems, Inc.).

In various embodiments, a model for representing hierarchy information, content and data types is shared between the API and the SPI. In this model, a node can represent hierarchy information, content or a schema information. Hierarchy nodes can serve as a containers for other nodes in the namespace akin to a file subdirectory in a hierarchical file system. Schema nodes represent predefined data types. Content nodes represent content/data. Nodes can have a shape defined by their properties. A property associates a name, a data type and an optional a value which is appropriate for the type. In certain of these embodiments, the properties of content nodes contain values. By way of an illustration, a type can be any of the types described in **Table** 1. Those of skill in the art will appreciate that many more types are possible and fully within the scope of the present disclosure.

**Table 1:** Exemplary Property Types in Various Embodiments

| PROPERTY TYPE | DESCRIPTION |
| --- | --- |
| Basic | Text, a number, a date/time, a Boolean value, a choice, an image, a sound, a bit mask, an audio/visual presentation, binary data. |
| Schema | The property is defined based on a schema node. |
| Link | A pointer/reference to data that lives "outside" of a node. |
| Lookup | An expression to be evaluated for locating another node in the VCR |
| Database Mapped | Maps to an existing database table or view. |

In various embodiments, a property can also indicate whether it is required, whether it is read-only, whether it provides a default value, and whether it specifies a property choice. A property choice indicates if a property is a single unrestricted value, a single restricted value, a multiple unrestricted value, or a multiple restricted value. Properties that are single have only one value whereas properties that are multiple can have more than one value. If a prop erty is restricted, its value(s) are chosen from a finite set of values. But if a property is unrestricted, any value(s) can be provided for it. A property can also be designated as a primary property. By way of illustration, the primary property of a node can be considered its default content. For example, if a node contained a binary property to hold an image, it could also contain a second binary property to represent a thumbnail view of the image. If the thumbnail view was the primary property, software applications such as browser could display it by default.

A named collection of one or more property types is a *schema.* A schema node is a place holder for a schema. In various embodiments, schemas can be used to specify a node's properties. By way of illustration, a *Person* schema with three properties (*Name, Address* and *Date of Birth*) can be described for purposes of discussion as follows:

```
Schema Person = {
     <Name=Name, Type=Text>,
     <Name=Address, Type=Address>,
     <Name=DateofBirth, Type=Date>}
```

Various embodiments allow a node to be defined based on a schema. By way of illustration, a content node *John* can be given the same properties as the schema *Person:*
Content Node John is a Person
In this case, the node *John* would have the following properties: *Name, Address* and *DateofBirth.* Alternatively, a node can use one or more schemas to define individual properties. This is sometimes referred to as nested types. In the following illustration, *John* is defined having an *Info* property that itself contains the properties *Name, Address* and *DateofBirth.* In addition, *John* also has a *CustomerId* property:

```
Content Node John = {
     <Name=Info, Type=Person>,
     <Name=CustomerId, Type=Number>}
```

Schemas can be defined logically in the VCR and/or in the individual repositories that form the VCR. In certain embodiments, schemas can inherit properties from at least one other schema. Schema inheritance can be unlimited in depth. That is, schema *A* can inherit from schema *B,* which itself can inherit from schema *C*, and so on. If several schemas contain repetitive properties, a. "base" schema can be configured from which the other schemas can inherit. For example, a *Person* schema containing the properties *Name, Address* and *DateofBirth,* can be inherited by an *Employee* schema which adds its own properties (i.e., *Employee ID, Date of Hire* and *Salary*):

```
Schema Employee inherits from Person = {
     <Name=EmployeeID, Type= Number>,
     <Name=DateofHire, Type=Date>,
     <Name=Salary, Type= Number>}
```

Thus, as defined above the *Employee* schema has the following properties: *Name, Address, DateofBirth, EmployeeID, DateofHire* and *Salary*. If the *Person* schema had itself inherited properties from another schema, those properties would also belong to *Employee.*

In various embodiments, nodes have names/identifiers and can be specified programmatically or addressed using a path that designates the node's location in a VCR namespace. By way of illustration, the path can specify a path from the federated root ('/') to the node in question ('c'):

/a/b/c

In this example, the opening '/' represents the federated root, 'a' represents a repository beneath the federated root, 'b' is a hierarchy node within the 'a' repository, and 'c' is the node in question. The path can also identify a property ("property1") on a node:

/a/b/c.property1

In aspects of these embodiments, the path components occurring prior to the node name can be omitted if the system can deduce the location of the node based on context information.

In various embodiments, a schema defined in one repository or the VCR can inherit from one or more schemas defined in the same repository, a different repository or the VCR. In certain aspects of these embodiments, if one or more of the repositories implicated by an inherited schema do not support inheritance, the inheriting schema can be automatically defined in the VCR by the API. In one embodiment, the inheriting schema is defined in the VCR by default.

By way of illustration, the *Employee* schema located in the *Avitech* repository inherits from the *Person* schema located beneath the *Schemas* hierarchy node in the *BEA* repository:

```
    Schema /Avitech/Employee inherits from /BEA/Schemas/Person =
 {
        <Name=EmployeeID, Type= Number>,
        <Name=DateofHire, Type=Date>,
        <Name=Salary, Type= Number>}
```

In various embodiments, the link property type (see **Table 1**) allows for content reuse and the inclusion of content that may not be under control of the VCR. By way of illustration, the value associated with a link property can refer/point to any of the following: a content node in a VCR, an individual property on a content node in a VCR, a file on a file system, an objected identified by a URL (Uniform Resource Locator), or any other suitable identifier. In various embodiments, when editing a content node that has a link property type, a user can specify the link destination (e.g., using a browser-type user interface). In certain aspects of these embodiments, if a link refers to a content node or a content node property that has been moved, the link can be automatically be resolved by the system to reflect the new location.

In various embodiments, a value whose type is lookup (see **Table 1**) can hold an expression that can be evaluated to search the VCR for instances of content node(s) that satisfy the expression. Nodes that satisfy the expression (if any) can be made available for subsequent processing. In various embodiments, a lookup expression can contain one or more expressions that can substitute expression variables from: the content node containing the lookup property, a user profile, anything in the scope of a request or a session. In various embodiments, an expression can include mathematical, logical and Boolean operators, function/method invocations, macros, SQL (Structured Query Language), and any other suitable query language. In various embodiments, an expression can be preprocessed one or more times to perform variable substitution, constant folding and/or macro expansion. It will be apparent to those of skill in the art that many other types of expressions are possible and fully within the scope and spirit of this disclosure.

In various embodiments, when editing a content node that has a lookup property type, the user can edit the expression through a user interface that allows the user to build the expression by either entering it directly and/or by selecting its constituent parts. In addition, the user interface can enable the user to preview the results of the expression evaluation.

Database mapped property types (see **Table 1**) allow information to be culled (i.e., mapped) from one or more database tables (or other database objects) and manipulated through node properties. By way of illustration, a company might have "content" such as news articles stored as rows in one or more RDBMS (Relational Database Management System) tables. The company might wish to make use of this "content" via their portal implementation. Further, they might wish to manage the information in this table as if it existed in the VCR. Once instantiated, a content node property that is of the database mapped type behaves as though its content is in the VCR (rather than the database table). In one embodiment, all API operations on the property behave the same but ultimately operate on the information in the database table.

In various embodiments, a given database mapped property type can have an expression (e.g., SQL) which, when evaluated, resolves to a row and a column in a database table (or resolves to any kind of database object) accessible by the system over one or more networks. A database mapped property will be able to use either native database tables/objects or database views on those tables/objects. It will be appreciated by those of skill in the art that the present disclosure is not limited to any particular type of database or resolving expression.

In aspects of certain embodiments, a schema can be automatically created that maps to any row in a database table. The system can inspect the data structure of the table and pre-populate the schema with database mapped properties corresponding to columns from the table. The table column names can be used as the default property names and likewise the data type of each column will determine the data type of each corresponding property. The system can also indicate in the schema which properties correspond to primary key columns. If certain columns from the table are not to be used in the new schema, they can be un-mapped (i.e. deselected) by a user or a process. A content node can be based on such a schema and can be automatically bound to a row in a database table (or other database object) when it is instantiated. In various embodiments, a user can interactively specify the database object by browsing the database table.

In various embodiments, a display template (or "template") can be used to display content based on a schema. Templates can implement various "views". By way of illustration, views could be "full", "thumbnail", and "list" but additional "views" could be defined by end-users. A full view can be the largest, or full page view of the content. A thumbnail view would be a very small view and a list view can be used when displaying multiple content nodes as a "list" on the page (e.g., a product catalog search results page). In various embodiments, the association between a schema and templates can be one-to-many. A template can be designated as the default template for a schema. In certain of these embodiments, templates can be designed with the aid of an integrated development environment (IDE).

In various embodiments and by way of an illustration, display templates can be implemented using HTML (Hypertext Markup Language) and JSP (Java® Server Pages). By way of a further illustration, such a display template can be accessed from a web page through a JSP tag which can accept as an argument the identifier of a content node. Given the content node, the node's schema and associated default display template can be derived and rendered. Alternatively, the JSP tag can talce an additional argument to specify a view other than the default. In another embodiment, display templates can be automatically generated (e.g., beforehand or dynamically at run-time) based on a content node's schema. In other embodiments, the view (e.g., full, thumbnail, list) can be determined automatically based on the contents of an HTTP request.

In various embodiments, a role is a dynamic set of users. By way of illustration, a role can be based on functional responsibilities shared by its members. In aspects of these embodiments, a role can be defined by one or more membership criteria. Role mapping is the process by which it is determined whether or not a user satisfies the membership criteria for a given role. For purposes of discussion, a role can be described as follows:

$$\text{Role = PMembers + [Membership Criteria]}$$

where *PMembers* is a set of user(s), group(s) and/or other role(s) that form a pool of potential members of this role subject to the *Membership Criteria,* if any. For a user or a process to be in a role, they must belong to *PMembers* and satisfy the *Membership Criteria.* The *Membership Criteria* can include one or more conditions. By way of illustration, such conditions can include, but are not limited to, one or more (possibly nested and intermixed) Boolean, mathematical, functional, relational, and/or logical expressions. By way of illustration, consider the following *Administrator* role:

$$\text{Administrator = Joe, Mary, SuperUser + CurrentTime > 5:00pm}$$

.

The role has as its potential members two users (*Joe* and *Mary*) and users belonging to the user group named *SuperUser.* The membership criteria includes a condition that requires the current time to be after 5:00 pm. Thus, if a user is *Joe, Marry* or belongs to the *SuperUser* group, and the current time is after 5:00 pm, the user is a member of the *Administrator* role.

In various embodiments, roles can be associated with *Resource(s).* By way of illustration, a resource can be any system and/or application asset (e.g., VCR nodes and node properties, VCR schemas and schema properties, operating system resources, virtual machine resources, J2EE application resources, and any other entity that can be used by or be a part of software/firmware of some kind). Typically, resources can be arranged in one or more hierarchies such that parent/child relationships are established (e.g., the VCR hierarchical namespace and the schema inheritance hierarchy). In certain of these embodiments, a containment model for roles is followed that enables child resources to inherit roles associated with their parents. In addition, child resources can override their parents' roles with roles of their own.

In various embodiments, *Membership Criteria* can be based at least partially on a node's properties. This allows for roles that can compare information about a user/process to content in the VCR, for example. In various embodiments, a node's property can be programmatically accessed using dot notation: *Article.Creator* is the *Creator* property of the *Article* node. By way of illustration, assume an *Article* node that represents a news article and includes two properties: *Creator* and *State.* A system can automatically set the *Creator* property to the name of the user that created the article. The *State* property indicates the current status of the article from a publication lifecycle standpoint (e.g., whether the article is a draft or has been approved for publication). In this example, two roles are defined (see **Table 2**).

**Table 2:** Exemplary Roles in an Embodiment

| ROLE NAME | ASSOCIATED WITH | PMEMBERS | MEMBERSHIP CRITERIA |
|---|---|---|---|
| Submitter | Article | Article. Creator | Article.State = Draft |
| Approver | Article | Editor | Article.State = (Submitted or Approved) |

The *Submitter* and *Approver* roles are associated with the *Article* node. Content nodes instantiated from this schema will inherit these roles. If a user attempting to access the article is the article's creator and the article's state is *Draft,* the user can be in the Submitter role. Likewise, if a user belongs to an *Editor* group and the article's state is *Submitted* or *Approved,* then the user can belong to the *Approver* role.

In various embodiments, a policy can be used to determine what capabilities or privileges for a given resource are made available to the policy's *Subjects* (e.g., user(s), group(s) and/or role(s)). For purposes of discussion, a policy can be described as follows:

$$\texttt{Policy = Resource + Privilege(s) + Subjects}$$
$$\texttt{+ [Policy Criteria]}$$

Policy mapping is the process by which *Policy Criteria,* if any, are evaluated to determine which *Subjects* are granted access to one or more *Privileges* on a *Resource. Policy Criteria* can include one or more conditions. By way of illustration, such conditions can include, but are not limited to, one or more (possibly nested and intermixed) Boolean, mathematical, functional, relational, and/or logical expressions. Aspects of certain embodiments allow policy mapping to occur just prior to when an access decision is rendered for a resource.

Similar to roles, in certain of these embodiments a containment model for policies is followed that enables child resources to inherit policies associated with their parents. In addition, child resources can override their parents' polices with policies of their own.

In various embodiments, policies on nodes can control access to privileges associated with the nodes. By way of illustration, given the following policies:

$$\texttt{Policy1 = Printer504 + Read/View + Marketing}$$

$$\texttt{Policy2 = Printer504 + All + Engineering}$$

the *Marketing* role can read/view and browse the *Printer504* resource whereas the *Engineering* role has full access to it ("All"). These privileges are summarized in **Table 3.** *Policy1* allows a user in the *Marketing* role to merely view the properties of *Printer504* whereas *Policy2* allows a user in the *Engineering* role to view and modify its properties, to create content nodes based on *Printer504* (assuming it is a schema), and to delete the resource.

**Table 3:** Exemplary Privileges for a "Printer504" Node in Various Embodiments

| ROLE | CREATE | READ/VIEW | UPDATE | DELETE | BROWSE |
|---|---|---|---|---|---|
| Marketing | | x | | | x |
| Engineering | x | x | x | x | x |

Aspects of certain of these embodiments include an implied hierarchy for privileges wherein child privilege(s) of a parent privilege are automatically granted if the parent privilege is granted by a policy. By way of illustration, the *Browse* privilege can be considered the least dominant of the privileges for the *Printer504* node. Addition of any other privilege will implicitly include *Browse.* For example, if the next step up is the *Read/View* capability, selection of *Read/View* will implicitly include the *Browse* privilege.

In various embodiments, the containment models for polices and roles are extended to allow the properties of a node to inherit the policies and roles that are incident on the node. Roles/polices on properties can also override inherited roles/polices. For purposes of illustration, assume the following policy on a *Power* property of *Printer504:*

```
Policy3 = Printer504.Power + Update + Marketing
```

In *Policy3,* the *Marketing* role is granted the right to update the *Power* property for the printer resource *Printer504* (e.g., control whether the printer is turned on or off). By default, the *Read/View* property is also granted according to an implied privilege hierarchy. (There is no *Browse* privilege for this property.) See **Table 4.** Alternatively, if there was no implied privilege hierarchy, the *Power* property would inherit the read/view privilege for the *Marketing* role from its parent, *Printer504.* Although no policy was specified for the *Power* property and the *Engineering* role, the privileges accorded to the *Engineering* role can be inherited from a parent node. These privileges are summarized in **Table 4.**

**Table 4:** Exemplary Privileges for the "Power" Property in the "Printer504" Node

| ROLE | CREATE | READ/VIEW | UPDATE | DELETE |
|---|---|---|---|---|
| Marketing | | x | x | |
| Engineering | x | x | x | x |

In various embodiments, the ability to instantiate a node based on a schema can be privileged. This can be used to control which types of content can be created by a user or a process. By way of illustration, assume the following policy:

```
Policy4 = Press_Release + Instantiate + Marketing, Manager
```

*Policy4* specifies that nodes created based on the schema *Press_Release* can only be instantiated by users/processes who are members of the *Marketing* and/or *Manager* roles. In aspects of certain of these embodiments, user interfaces can use knowledge of these policies to restrict available user choices (e.g., users should only be able to see and choose schemas on which they have the *Instantiate* privilege).
In various embodiments, policies can be placed on schemas. Instances of a schemas (e.g., content nodes), can inherit these policies unless overridden by a more local policy. For purposes of illustration, assume the following policies:

```
Policy5 = Press_Release + Read/View + Everyone
```

```
Policy6 = Press_Release + All + Public_Relations
```

**Table 5:** Exemplary Privileges for the "Press Release" Schema

| ROLE | CREATE INSTANCE | READ/VIEW | UPDATE | DELETE | BROWSE |
|---|---|---|---|---|---|
| Everyone | | X | | | x |
| Public Relations | x | X | x | x | X |

With reference to **Table 5** and by way of illustration, assume a content node instance was created based on the Press Release schema. By default, it would have the same roles/polices as the Press Release schema. If a policy was added to the node giving a role "Editor" the privilege to update the node, the result would be additive. That is, Everyone and Public Relations would maintain their original privileges.
In various embodiments, policies can be placed on properties within a schema, including property choices. (Property choices are a predetermined set of allowable values for a given property. For example, a "colors" property could have the property choices "red", "green" and "blue".) Instances of a schemas (e.g., in content nodes), would inherit these property policies unless overridden by a more local policy.

In various embodiments, content and schema nodes can follow lifecycles. In certain aspects of these embodiments, a lifecycle can set forth: a set of states through which a node can pass; actions that can occur as part of or resulting from state transitions; and actors that can participate in the lifecycle. By way of illustration, lifecycles can be used to model an organization's content approval process. In various embodiments, lifecycles can be nested within lifecycles. This allows for complex lifecycles to be compartmentalized for easy manipulation and development. Various embodiments include a lifecycle definition, an extensible lifecycle system, an interactive lifecycle design tool to generate and/or modify lifecycle definitions, and means for lifecycles to interact with other systems. If a content repository does not natively support lifecycles, support can be provided by the VCR.

In various embodiments, a lifecycle can be associated with, or be a property of, a node. In aspects of these embodiments, if a lifecycle is associated with a hierarchy node, the children of the hierarchy node will also be associated with the lifecycle. Likewise, if a lifecycle is associated with a schema, nodes instantiated based on the schema will also be associated with the lifecycle. Lifecycles can also be directly associated with content nodes.

In various embodiments and by way of illustration, a node can transition from a current state to a new state. Before, during or after a transition, one or more actions can be performed. Actions can optionally operate on and/or utilize the node. Actions can include any type of processing that can be invoked in the course of the lifecycle. By way of an example, actions can include function/method calls, remote procedure calls, inter-process communication, intra-process communication, interfacing with hardware devices, checking a node into/out of version control, assigning the node to a user, group or role, performing some kind of processing on the node (depending on any policies that may be defined on the node), providing a notification to users, groups and/or roles, and other suitable processing. Actions can also be specified as command(s), directive(s), expression(s) or other constructs that can be interpreted or mapped to identify required processing. For example, high-level action directives such as "publish" could cause a content node to be published, and an e-mail or other message to be sent to certain parties. It will be apparent to those of skill in the art that any action is within the scope and the spirit of the present disclosure.

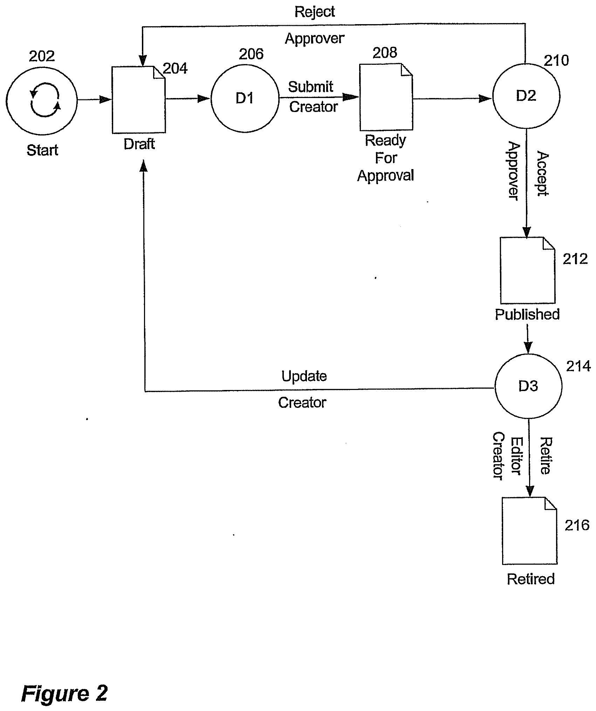

An exemplary lifecycle for a content node representing a news article is illustrated in **Table 6** and **Figure 2.** States are illustrated in **Figure 2** as document icons **(204, 208, 212, 216)** and decision points between states are illustrated as circles **(206, 210, 214).** Transitions between states are illustrated as lines that are directed to show the order of states. In aspects of certain of these embodiments, transitions between states can pass through one or more decision points. A decision point is a visual placeholder (e.g., an icon in an IDE graphical editor) for restricting transitions to user(s), groups(s), and role(s); and for specifying action(s) that can accompany a change in state, if any. A decision point can connect a state to at least one other state. Actions can be controlled by policies and/or roles associated with the node and keyed off of the lifecycle state (e.g., state can be a property of a node) to allow certain classes of users/processes privileges in different states.

1. **Table 6:** Exemplary Lifecycle in Various Embodiments

| CURRENT STATE | ACTION(S) | ROLE(S) | NEXT STATE |
| --- | --- | --- | --- |
| Start | | | Draft |
| Draft | Submit | Creator | Ready for Approval |
| Ready for Approval | Accept | Approver | Published |
| Ready for Approval | Reject | Approver | Draft |
| Published | Retire | Editor, Creator | Retired |
| Published | Update | Creator | Draft |

The exemplary lifecycle in **Figure 2** begins at *Start* state **202** which has an unrestricted transition to the next state in the lifecycle, the *Draft* state **204.** A transition can be unrestricted or restricted to a set of user(s), group(s) and/or role(s). In aspects of these embodiments, a role can be delegated to a user through delegated administration. By way of illustration, approval capabilities can be based on capabilities in a delegated administration model. In one embodiment, a restriction can provide that only certain authorized users/processes can bring about a transition to the next state. In various embodiments, a state change can be initiated by a user interacting with the node through a tool and/or by a process interacting with the node through the VCR API. In certain aspects of these embodiments, the current state of a node is a property of the node. By way of an example, modifying the state property (e.g., changing it from "Start" to "Draft", assuming the user/process is authorized to do so), can cause attendant lifecycle processing to take place, such as performing actions defined on the transition.

The news article can be modified by user(s) and/or process(es) while in the *Draft* state and then submitted for approval. By way of an example, a user can check-out the news article (assuming it is under version control), modify it, and then check-in the article with the changes. Before checking the article in, the user can change the state property from "Draft" to "Ready for Approval" in order to bring about a transition to the *Ready for Approval* **208** state. By way of a further illustration, a user interface can present a button or a menu option that a creator can be selected when the user has finished editing the article. Once selected, the article can be automatically submitted to the lifecycle where it can progress to the next state. In this illustration, the transition through decision point *D1* **206** to the *Ready for Approval* state is constrained to users in the *Creator* role. Thus, only a user/process that created the article can cause the article to transition into the *Ready for Approval* state.

The transition from *Draft* to *Ready for Approval* also has an accompanying action, *Submit.* By way of an example, this action can cause a notification to be sent to those interested in reviewing articles for approval. Alternatively, or in addition to this, the news article can be assigned to users/groups/roles. In this way, users/processes that are in the assigned users/groups/roles can review it while it is in the *Ready for Approval* state. From the *Ready for Approval* state, there is a transition through decision point *D2* **210.** The *D2* decision point specifies that a user/process in the *Approver* role can cause a transition to the *Draft* state **204** or to the *Published* state **212.** If the transition is to the *Draft* state, the action associated with the transition will be to *Reject* the article. A rejected article will repeat the lifecycle path from *Draft* to *Ready for Approval.* If the transition is to the *Published* state, however, the action will be to *Accept* the article. Once the article is in the *Published* state, a user/process in the role of *Editor* or of *Creator* can cause a transition to the *Retired* state **216.** A user in the role of *Creator* can cause a transition to the *Draft* state. Transitioning from the *Published* state to the *Draft* state causes an *Update* action whereas transitioning from the *Published* state to the *Retired* state causes a *Retire* action.

In aspects of these embodiments, roles can be organized into a role hierarchy such that superior roles can skip state transitions required of inferior roles. By way of illustration, suppose the *Approver* role was superior to the *Creator* role. If the current lifecycle state of the article was *Draft,* a user in the role of *Approver* could skip the *Ready for Approval* state and transition the article all the way to the *Published* state. In one embodiment, actions associated with the decision points *D1* and *D2* could be automatically invoked even though the *Ready for Approval* state was skipped.

In various embodiments and by way of illustrations, lifecycles can be defined using a text editor and/or an IDE. From a text editor a user can create a full lifecycle definition in a language (e.g., XML). In a graphical environment, a user can create different states and then connect them together to represent transitions. In an embodiment, a graphical depiction of a lifecycle can appear as in **Figure 2.** Graphical representations of states and decision nodes can be placed onto an IDE canvas and connected to form transitions. Property sheets associated with the graphical objects can allow a user to interactively specify roles and actions associated with states and/or transitions. In aspects of these embodiments, a user can easily switch between graphical and textual representations of a lifecycle since both representations are equivalent.

In various embodiments, third party lifecycle engines can be invoked. This allows additional functionality to be seamlessly incorporated into the lifecycle model. In one embodiment, this can be accomplished from within a lifecycle through lifecycle actions. In another embodiment, third party lifecycles can be invoked through a callback mechanism. By way of illustration, the VCR API can invoke a third party lifecycle in response to certain events, such as when a content node/scenario has been modified and/or its state property has changed. In this illustration, a process which implements a third party lifecycle can register to receive callbacks when these events occur. The callback notification can also include the VCR node identifier and optionally context information such as information about the user/process that caused the event.

In various embodiments, lifecycles can be utilized from other processes. The VCR API includes a lifecycle interface to allow access to a node's lifecycle definition. In addition, the lifecycle interface allows a process to drive a node through the lifecycle by providing functionality such as the ability to ascertain a node's current state, place the node in a new state based on transition choices available from its current state, and invoke actions associated with a state transition.

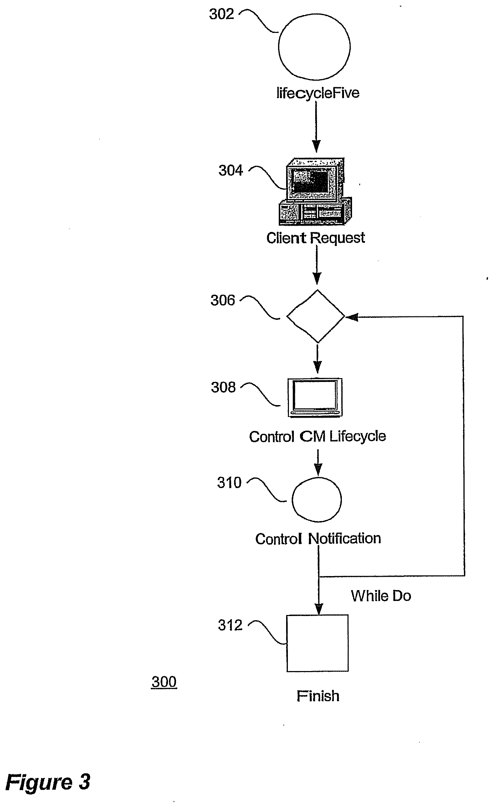

**Figure 3** is an illustration of an exemplary external scenario that invokes a lifecycle in various embodiments. From an IDE, a user can create a visual representation of a scenario as depicted in **Figure 3.** In this illustration, the scenario includes a starting point **302** icon followed by a client request control icon **304** that represents a process for receipt of a client request. After the request is received, the scenario enters a "while" loop **306.** Within the loop, a lifecycle control icon **308** representing a VCR lifecycle causes the associated lifecycle to be invoked. The lifecycle control can have associated properties that identify the lifecycle and the node that it will drive through the lifecycle. In aspects of these embodiments, a control can be a Java™ control. The lifecycle control can drive the node through the lifecycle using the lifecycle interface of the VCR API. After the lifecycle has completed, the scenario invokes a notification control **310** that can cause a notification of lifecycle completion to be sent to various user/process.

Various embodiments of the system include a version control capability that is available for nodes such that a history of states is maintained over the lifetime of a node. In various embodiments, one version of a node is considered the published version. In certain aspects of these embodiments, versions are given names (or other suitable identifiers) and can be stored or accessed via a version list associated with the particular node. In aspects of these embodiments, the VCR can provide support for versioning if the repository in which the node is persisted does not.

In various embodiments, a version of a node can also include identification of the user/process that last modified the version and a description or comment. A node under version control can be moved or copied within the VCR. In various embodiments, version history travels with the node during a move or a copy. When the user or a process moves a content node the history of that node moves with it. In case of a roll back, parent version of the roll back can be indicated in the history. In various embodiments, a node's version can be "rolled back" (i.e., restored) to a previous version. In aspects of these embodiments, upon roll back the selected content node version to restore becomes the latest version of the content node. In certain of these embodiments, the rolled back version is automatically given a new version identifier (e.g., old version number + 1).

Each node can have a lock (e.g., semaphore or other suitable means for controlling access to the node). Locks prevent a node from being modified by more than one user/process at the same time. When a node is checked-out of version control, the user acquires the lock. Lock acquisition prevents others from checking-out versions associated with the node until it is checked-in. Locks can be employed on the node level or on the version level. If version-level locks are employed, it is possible for more than one version of a node to be checked-out at the same time. Version control can be turned on/off for a given node, repository, and/or VCR. In one embodiment, a node that does not utilize version control has only a single version in its version list.

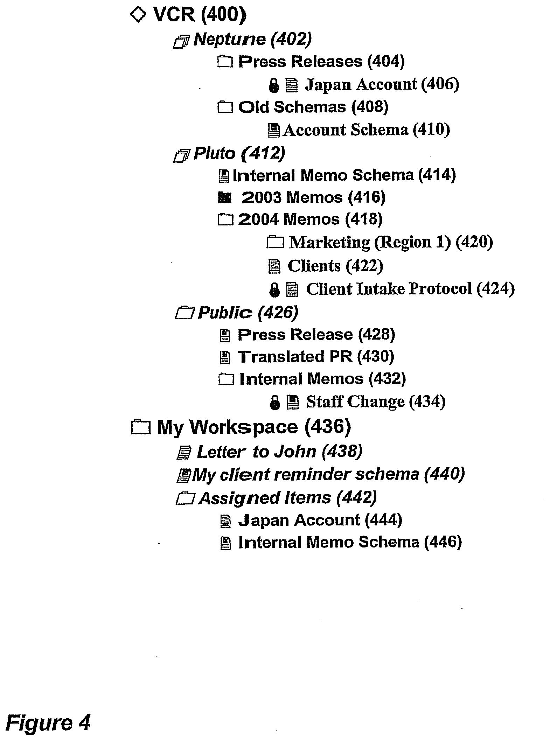

Versioning includes the ability for a user or a process to check-out a node version for editing. By way of illustration, a user can click on an item in a tree browser view of a VCR (see **Figure 4** and accompanying text). In aspects of these embodiments, a user or process can choose which version of a node to check out The tree browser can display (e.g., via a pop-up menu or tool tip) the following information for each version: version number/identifier, date version was last saved, the user/process that performed the last save, and optional comment(s). In various embodiments, a user can select the version to check-out by interactively browsing the version history of a particular node with the aid of a user interface such as a tree browser. In one embodiment, the most recent version of a node is checked-out by default if the version is not specified.

In one embodiment, a user interface can provide a rendering of a node's properties. For example, a user can select an 'Edit Content' button in order to edit the node's properties. This action can attempt to check-out the node if it is not already checked-out. In various embodiments, a given user's checked-out nodes appear in the user's workspace (see **Figure 4**). The user can save their work until check-in time. In various embodiments, nodes that are "saved" do not change versions or produce a version increment. From other users' perspective the node is still checked-out. Once a user has finished editing, any changes can be discarded or checked into the VCR.

Upon check-in, a new version of the node is available in the system. In various embodiments, checking-in a node causes the node to appear in the VCR but not in the user's workspace. A user/process can enter a description of the changes made to the node during check-in time. The description can be saved along with the version. Checking a node into the workspace also causes the associated lock to be released (so that others can edit) and, if versioning is turned on, creates a new version of the node. However, it the user merely saves their work rather than checking it in, the node will remain in the workspace and a new version will not be generated. In aspects of these embodiments, if a lifecycle is associated with the node, checking the node in can submit the node to the lifecycle.

By way of a illustration and with reference to **Figure 2,** a user in the role of an *Creator* can submit a news article for approval by changing the news article's state to "Ready for Approval" and then checking it in. In one embodiment, a drop-down list of states to which the state property can be assigned is made available to the user. The drop-down list can be filtered based on the user's role and/or the stage of the lifecycle. After check-in, the workspace of a user in the role of *Approver* updates to show the news article as an item assigned to the user. In various embodiments, the *Approver* could also receive an alert (e.g., e-mail, instant message, page, etc.) to indicate that the news article is available for review. If the approver chooses to edit the news article, the approver can check it out. Once the approver acquires the lock, this item will disappear from the 'Assigned Items' part of the workspace of everyone else in the *Approver* role.

In various embodiments, a user/process can navigate to a node and perform a delete action. In one embodiment, deleting a node changes its state (e.g., to *Retired* or *Deleted*). A user can view all deleted nodes at a later time and choose to permanently delete them or to un-delete them. In another embodiment, deleting a node permanently removes it from the VCR. In one embodiment, a node can be deleted regardless of its lifecycle state. In one embodiment, a node cannot be deleted if it is checked-out. In one embodiment, deleting a node causes all of the node's children to be deleted. In one embodiment, only a node's checked-in children are deleted. In yet another embodiment, a deleted node (and, optionally, its children) can be un-deleted.

**Figure 4** is an exemplary user interface in various embodiments of the invention. By way of an example, a user interface can include one or more of the following: 1) a graphical user interface (GUI) (e.g., rendered with Hypertext Markup Language); 2) an ability to respond to sounds and/or voice commands; 3) an ability to respond to input from a remote control device (e.g., a cellular telephone, a PDA, or other suitable remote control); 4) an ability to respond to gestures (e.g., facial and otherwise); 5) an ability to respond to commands from a process on the same or another computing device; and 6) an ability to respond to input from a computer mouse and/or keyboard. This disclosure is not limited to any particular user interface. Those of skill in the art will recognize that many other user interface embodiments are possible and fully within the scope and spirit of this disclosure.

A user interface according to various embodiments and by way of illustration can include an interactive graphical tree browser as is well known in the art to allow users to explore and interact with the VCR and their workspace. A tree browser presents a hierarchical view of nodes and schemas. The indentation level of a node indicates parent/child relationships. In various embodiments, the tree browser can present one or more views of the VCR. These views can include (but are not limited to), published nodes, unpublished nodes, retired nodes, deleted nodes, assigned nodes, locked nodes, and nodes waiting for approval. In aspects of these embodiments, a user can customize the tree browser to include one or more of these views. The views can be presented as separate trees or as a merged tree. In various embodiments, views can be automatically customized to particular user(s). For example, roles and/or polices that adorn nodes can be used to filter the view. By way of illustration, the assigned items view and waiting for approval view will only show nodes that are applicable to a given user. In one embodiment, this can be accomplished by examining roles in lifecycle transitions and filtering out nodes for lifecycles that a given user cannot interact with.

By way of illustration, a tree browser can expose VCR **400,** the federated root. It contains two repositories (*Neptune* **402** and *Pluto* **412**) and a *Public* hierarchy node **426.** In various embodiments, nodes can be decorated with a folder or related visual symbol to indicate their purpose. In aspects of these certain embodiments, selection of a folder icon or hierarchy node name causes the contents of the node to expand beneath it in the tree. In further aspects of these embodiments, selection of any type of node can allow a user to edit the properties of the node. In one embodiment, schemas can be defined anywhere in the VCR, including directly beneath the federated root (not shown). Schemas that are not defined in a repository (e.g., **428, 430** and **434**) are considered virtual in various embodiments. The *Neptune* repository **402** contains two repository nodes: *Press Releases* **404** and *Old Schemas* **408.** *Press releases* contains a content node named *Japan Account* **406,** which is currently locked (e.g., checked-out) as indicated by the padlock icon next to its name. Only the user who has checked-out the node can edit it. Others can optionally view it depending on roles and/or privileges. The *Old Schemas* hierarchy node contains a schema named *Account Schema* **410** which is currently unlocked. In aspects of these embodiments, a node's properties can be viewed by selecting the node in the tree browser. If the selected node is not locked, the system can automatically attempt to obtain a lock on behalf of the user.

The *Pluto* repository includes a schema **414** and two top-level hierarchy nodes **(416, 418).** One of the hierarchy nodes, *2003 Memos* **416,** has a folder symbol that is a solid color, the other has an outline of a folder symbol **418.** In one embodiment, a special visual symbol (e.g., a solid folder icon) can indicate to a user that the hierarchy node has a schema and/or a lifecycle associated with it. In various embodiments, associating a schema and/or a lifecycle with a hierarchy node results in the schema and/or lifecycle being imposed on or inherited by the children of the hierarchy node. The *2004 Memos* hierarchy node contains another hierarchy node **420,** an unlocked content node **422** and a locked content node **424.**

In various embodiments, the user interface can provide a logical Workspace folder **436** that provides quick access to a user's new, checked-out and assigned items. Assigned items are those items which are assigned to one or more users, groups and/or roles according to a lifecycle or some other suitable means. In this illustration, there are two nodes assigned to the user: *Japan Account* **444** and *Internal Memo Schema* **446.** The user has checked-out *Japan Account* node since it appears in the VCR tree with a padlock beside it unlike the *Internal Memo Schema* which is not currently checked-out. The user has not checked-out the *Staff Change* schema **434** since it does not appear in their Workspace (i.e., another user or process has checked it out). In various embodiments, by selecting the *Staff Change* schema **434** the user can discover who holds the lock and when they obtained it.

In various embodiments and by way of a further illustration, new nodes can be created. Newly created nodes can appear in the workspace of the user that created them until they are published in the VCR. Aspects of certain of these embodiments allow a user to create new nodes through a user interface that enables the user to select in which VCR, repository or hierarchy node the new node will reside. The user can indicate whether a version history should be maintained for the new node and can add properties to it or base its properties on a schema. A lifecycle for the new node can also be specified. A tree browser can be updated to reflect the addition of the new node.

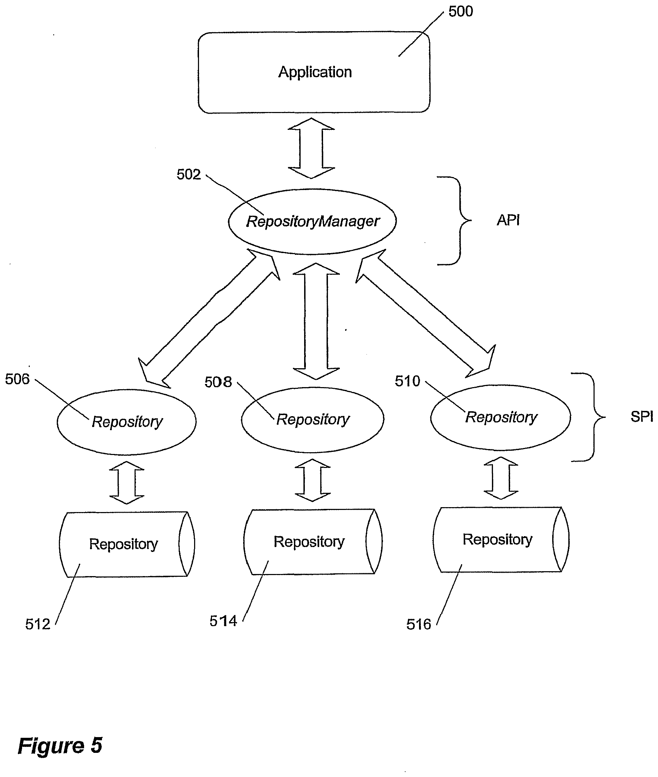

**Figure 5** is an exemplary illustration of objects/interfaces that can be used in connecting a repository to a VCR in various embodiments of the invention. Although this diagram depicts components as logically separate, such depiction is merely for illustrative purposes. It will be apparent to those skilled in the art that the components portrayed in this figure can be arbitrarily combined or divided into separate software, firmware and/or hardware. Furthermore, it will also be apparent to those skilled in the art that such components, regardless of how they are combined or divided, can execute on the same computing device or can be distributed among different computing devices connected by one or more networks or other suitable communication means.

The *RepositoryManager* **502** can serve as a representation of a VCR from an application program's **500** point of view. In aspects of these embodiments, the *RepositoryManager* attempts to connect all available repositories to the VCR (e.g., **512 - 516**); optionally with user or process credentials. In various embodiments, this can be based on the Java™ Authentication and Authorization Service (available from Sun Microsystems, Inc.). Those of skill in the art will recognize that many authorization schemes are possible without departing from the scope of the present disclosure. Each available content repository is represented by an SPI *Repository* object **506-510**. The *RepositoryManager* can invoke a *connect()* method on the set of *Repository* objects. In various embodiments, the *RepositoryManager* return a list of repository session objects to the application program, one for each repository for which a connection was attempted. Any error in the connection procedure can be described by the session object's state. In another embodiment, the *RepositoryManager* can connect to a specific repository given the repository name. In various embodiments, the name of a repository can be a URI (uniform resource identifier).

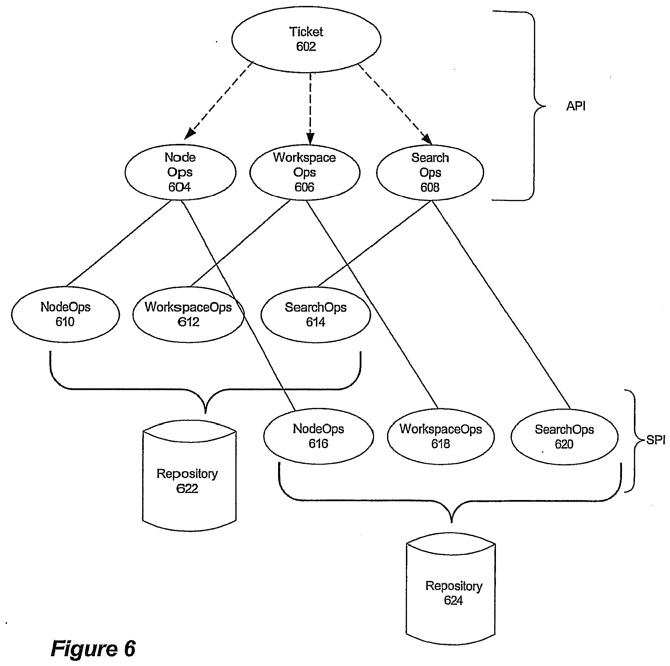

**Figure 6** is an exemplary illustration of objects/interfaces that can be used as service model in various embodiments of the invention. Although this diagram depicts components as logically separate, such depiction is merely for illustrative purposes. It will be apparent to those skilled in the art that the components portrayed in this figure can be arbitrarily combined or divided into separate software, firmware and/or hardware. Furthermore, it will also be apparent to those skilled in the art that such components, regardless of how they are combined or divided, can execute on the same computing device or can be distributed among different computing devices connected by one or more networks or other suitable communication means.

Referring to **Figure 6,** a dashed arrow indicates that the object/interface from which the arrow emanates can produce at run-time objects/interfaces to which the arrow points. A *Ticket* **602** is an API level object/interface that provides access to VCR service object/interfaces:, *NodeOps* **604,** *WorkspaceOps* **606** and *SearchOps* **608.** Each repository connected to the VCR provides implementations of certain of these objects/interfaces as part of the SPI. A *Ticket* **602** object/interface is intended to be light-weight. As such, one or more may be created and possibly cached for each application/process accessing the VCR. A ticket can utilize a user or a process's credentials to authorize a service. In various embodiments, a ticket can be an access point for *NodeOps* **604,** *WorkspaceOps* **606,** and *SearchOps* **608.**

By way of illustration, repository **622** provides *NodeOps* **610,** *WorkspaceOps* **612** and *SearchOps* **614.** Repository **624** provides *NodeOps* **616,** *WorkspaceOps* **618** and *SearchOps* **620.** API level objects/interfaces communicate with their corresponding SPI level objects/interfaces. In this way, an operation on an API-level object can be distributed to each repository such that each repository can work in parallel to perform the requested operation. Accordingly, an operation that might take on average time $M * N$ to perform on all repositories sequentially in theory might only require time $M$, where $N$ is the number of repositories in the VCR.

The *NodeOps* **604** provides create, read, update, delete methods for nodes and node properties in the VCR. In aspects of these embodiments, nodes and properties can be operated on based on an identifier, a path in the VCR or through any other suitable relative or absolute reference. When the API *NodeOps* **604** receives a request to perform an action, it can map the request to one or more SPI *NodeOps* **(610, 616)** which in turn fulfill the request using their associated repositories. In this way, applications and libraries utilizing the API see a single VCR rather than individual content repositories. *NodeOps* functionality exposed in the API can include the following:

- Update a given node's properties and property definitions.
- Copy a given node to a new location in a given hierarchy along with all its descendants.
- Create a new content node underneath a given parent.
- Create a new hierarchy node underneath a given parent.
- Perform a full cascade delete on a given node.
- Retrieve all the nodes in a given node's path including itself.
- Retrieve content node children for the given parent node.
- Retrieve hierarchy node children for the given parent node.
- Retrieve a node based on its ID.
- Retrieve a node based on its path.
- Retrieve the children nodes for the given hierarchy node.
- Retrieve the parent nodes for the given hierarchy node.
- Retrieve all the nodes with a given name.
- Retrieve the Binary data for given node and property ids.
- Moves a node to a new location in the hierarchy along with all its descendants.
- Renames a given node and implicitly all of its descendants paths.
- Get an iterator object which can be used to iterate over a hierarchy.

In various embodiments, *WorkspaceOps* **606** exposes services for versioning, including the services to check-in/check-out nodes, node/property locking, access node version history, lifecycle manipulation, labeling, and jobs. When the API *WorkspaceOps* **606** receives a request to perform an action, it can map the request to one or more SPI *WorkspaceOps* **(612, 618)** which in turn fulfill the request using their associated repositories. *WorkspaceOps* functionality exposed in the API can include:

- check-in: Unlocks the node and saves the node along with it's working version.
- check-out: Locks the node such that only the user/process that locked it may save or check it in and creates a new working version.
- copy: Recursively copies the published source node to the destination.
- create: Creates a new Node and also a working version for it, if attached to the node.
- delete: Deletes a node version with the given version.
- get: Gets the Node at the given path.
- get versions: Returns all versions for the given Virtual Node.
- save: Saves the node and the working version of the node (if attached to the node), which is the current version on the node.
- submit: Submits the node to it's life cycle.

In various embodiments, *SearchOps* **608** provides API searching services for retrieving nodes, properties, and/or property values throughout the entire VCR based on one or more search expressions. When the API *SearchOps* **608** receives a request to perform an action, it can map the request to one or more SPI *SearchOps* **(614, 620)** which in turn fulfill the request using their associated repositories. The API *SearchOps* **608** combines the search results from each SPI *SearchOps* into a result set. In various embodiments, result sets can be refined by performing a further searches on the items in the result set.

Search expressions can include (but are not limited to) one or more logical expressions, Boolean operators, nested expressions, variables, identifiers node names, function/method invocations, remote procedure calls, mathematical functions, mathematical operators, string operators, image operators, and Structured Query Language (SQL). Search expressions can also include support for natural language queries, keyword searching, fuzzy logic, proximity expressions, wildcard expressions, and ranging search types. In various embodiments, the result set can be tailored according to roles/policies in effect on the items that satisfy the search expressions. Those items which a user/process does not have permission to view can be filtered during the search or after the results have been gathered.

In aspects of these embodiments, search results can be ranked according to ranking algorithms and criteria. In one embodiment, a ranking algorithm can rank the result set according to what extent items in the result set satisfy the search expression(s). It will be apparent to those of skill in the art that many other ranking algorithms are possible and fully within the scope and spirit of the present disclosure. In various embodiments, multiple ranking algorithms can be applied to the result set. In one embodiment, the ranking criteria for a given ranking algorithm can be adjusted by a user/process.

In various embodiments, jobs provide the ability to perform VCR operations on sets of nodes. By way of illustration, a job can be used to check-in and check-out a set of nodes as a group, or send a group of nodes through a lifecycle together. In aspects of these embodiments, a job identifier and/or a label can be associated with a node to indicate its inclusion in a particular job and/or label set. In one embodiment, if a job becomes ready for approval, all nodes in the job will reach this state. In various embodiments, a label can be used to tag a repository or a group of nodes. By way of illustration, this provides a way to refer to a set of nodes with different versions. By way of further illustration, labels can be used to in search expressions.

In various embodiments, information in the VCR can be exported in an external format. In aspects of these embodiments, the external format can be XML or another suitable language/representation (e.g., HTML, natural language, a binary file) that can preserve the hierarchical structure of the information. Exporting of all or some of the VCR nodes allows "snapshots" of the VCR for backing-up the VCR, transporting information in the VCR to another repository, and reloading the nodes at a later date. In various embodiments, a node and all of its children will be exported by an export process. By way of an example, if the federated root was chosen to be exported, the entire VCR would be exported. By way of a further example, an export process can recursively traverse the VCR . (e.g., depth-first or bread-first traversal), serializing information associated with each node that is visited (e.g., content, hierarchy and schema nodes). Aspects of these embodiments have a "preview" mode where it is reported what information (e.g., nodes, lifecycles, roles, policies) would be exported.

In various embodiments, an import process can do the work of the export process in reverse by de-serializing each node (and other information) and adding it at the appropriate place in the VCR namespace. In another embodiment, the import process can install nodes beneath a chosen node rather then in their original location. As with the export process, aspects of these embodiments have a "preview" mode where it is reported what information (e.g., nodes, lifecycles, roles, policies) would be imported into the VCR. In addition to node properties, various embodiments allow the export and import of version history, roles and/or policies associated with content and schema nodes.

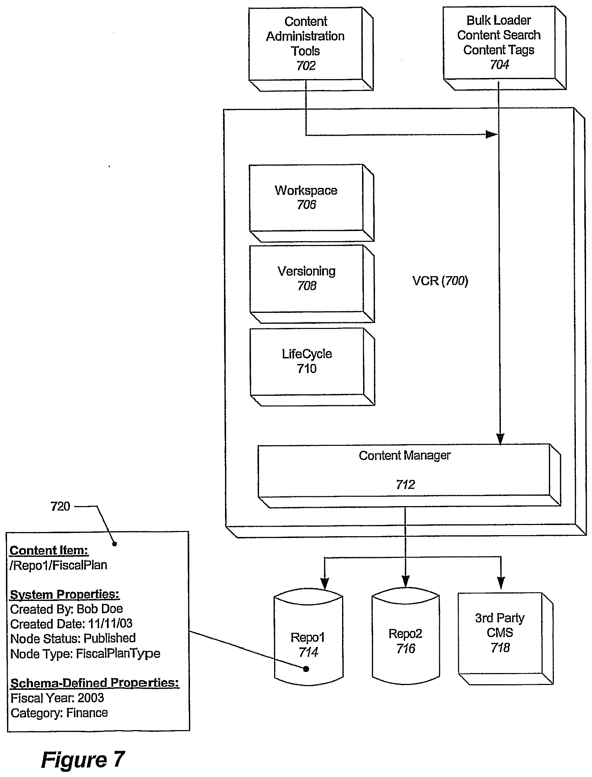

**Figure 7** is an exemplary illustration of content creation while VCR content services are disabled in accordance to various embodiments of the invention. Although this diagram depicts components as logically separate, such depiction is merely for illustrative purposes. It will be apparent to those skilled in the art that the components portrayed in this figure can be combined or divided into separate software, firmware and/or hardware components. Furthermore, it will also be apparent to those skilled in the art that such components, regardless of how they are combined or divided, can execute on the same computing device or can be distributed among different computing devices connected by one or more networks or other suitable communication means.

**Figure 7** shows a VCR **700** with two integrated repositories **(714, 716)** and an integrated third party content management system **718.** Although not depicted, each of the subsystems **(714-718)** can implement an SPI that allows for its integration into the VCR. Also illustrated are content services provided by the VCR including user workspace management **706,** content versioning **708** and lifecycle management **710.** In addition to federation, the VCR can provide one or more of its content services to subsystems that lack them. By way of illustration, if repository *Repo1* does not natively support versioning, the VCR can automatically provide this service for nodes in.that repository.

Box **702** represents one or more content administration tools which can be used to create, modify and delete information in the VCR. These tools can take advantage of the VCR's content services. Box **704** represents one or more tools that can operate on repositories without the need for content services. By way of example, these can include bulk content loaders, content searching tools and content tags. A content manager API component **712** can be used to manage interaction between the VCR and its integrated subsystems.

**Figure 7** illustrates the creation of a content node wherein the VCR's content services are not enabled. Box **720** represents the content node named *FiscalPlan* located in the VCR at */Repo1/FiscalPlan* and stored in repository *Repo1.* The node also has default system proprieties, e.g. *Created By, Created Date, Node Status,* and *Node type.* The node type is a schema called *FiscalPlanType* which has properties *Fiscal Year* and *Category.* In this instance, these properties have been set to 2003 and "Finance," respectively. Notice also that the *Node Status* is "Published."

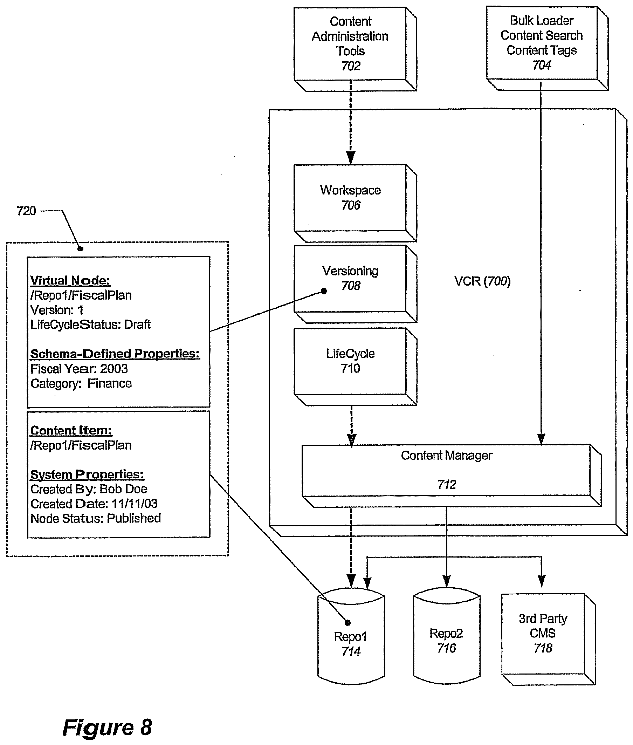

**Figure 8** is an exemplary illustration of content creation while VCR content services are enabled in accordance to various embodiments of the invention. This example is similar to that in **Figure 7,** however content services are enabled in the VCR. The same content node */Repo1/FiscalPlan* is created but using the content administration tools (which utilize content services). The system first creates a content item in *Repo1* containing system properties as before. However, the schema-defined properties are stored in the VCR as a first version of the node rather than in *Repo1,* since *Repo1* has no versioning capability. In addition to a version number, the node now also includes a lifecycle status to indicate which lifecycle state the node is in. In this example, the node's lifecycle status is "Draft." The system can also lock version 1 for the user who created it and provide access to the node through that user's workspace. When the user checks the node in, it is submitted to its lifecycle (if any).

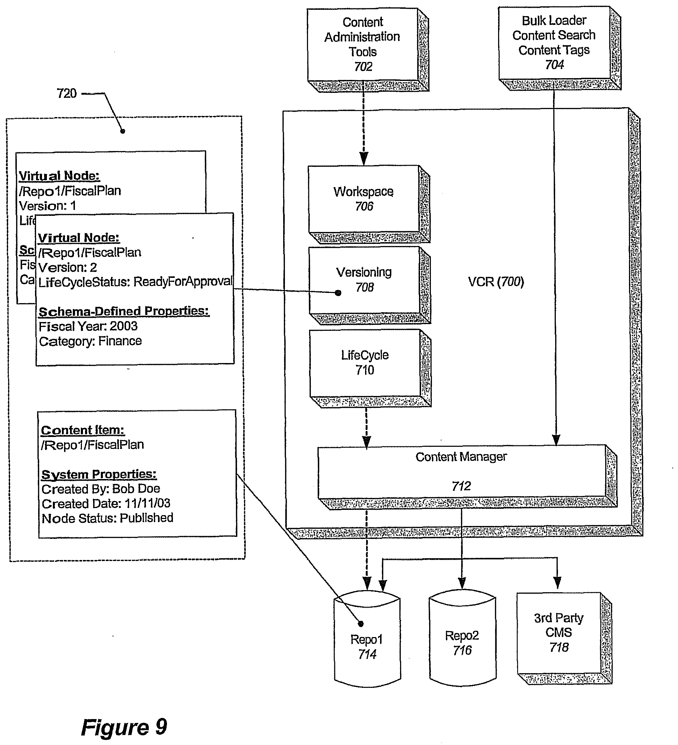

**Figure 9** is an exemplary illustration of modifying a node in the VCR while content services are enabled in accordance to various embodiments of the invention. This figure follows from the **Figure 8** discussion above. In this illustration, the node */Repo1/FiscalPlan* is checked out by a user, which has the effect of creating a new version (version 2) in the VCR, locking the new version, and assigning it to the user. Here, the user has changed the lifecycle status to "ReadyForApproval." When the node is checked in, its schema-defined properties are saved to version 2. In addition, the system releases the lock and submits the node to its lifecycle. By way of illustration, this may have to effect of placing the node in the workspaces of users in a given role (e.g., the publisher role).

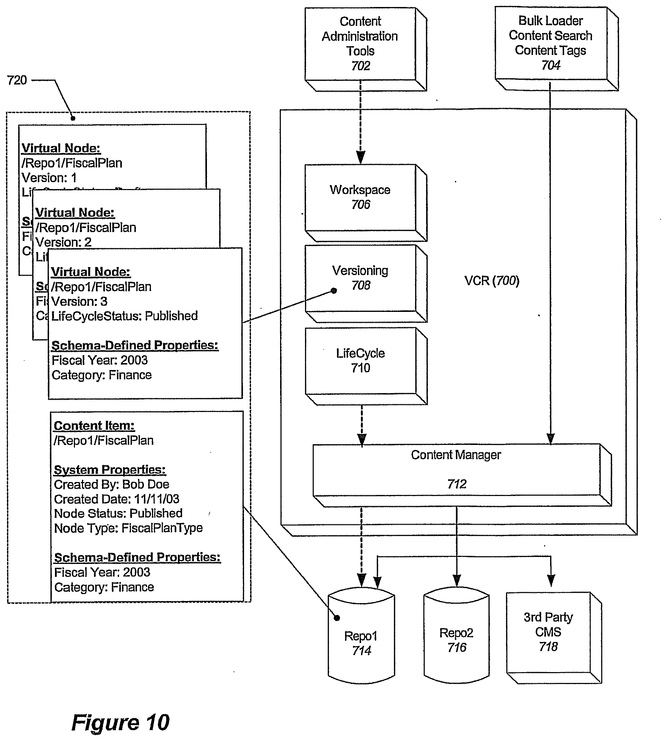

**Figure 10** is an exemplary illustration of publishing a node in the VCR while content services are enabled in accordance to various embodiments of the invention. This figure follows from the **Figure 9** discussion above. In this illustration, the node */Repo1/FiscalPlan* is again checked out by a user, which has the effect of creating a new version (version 3) in the VCR, locking the new version, and assigning it to the user. Here, the user has changed the lifecycle status to "Published." When the node is checked in, the schema-defined properties are saved to version 3. In addition, the system unlocks the node and publishes its schema-defined properties and the *Node Type* from version 3 to *Repo1.*

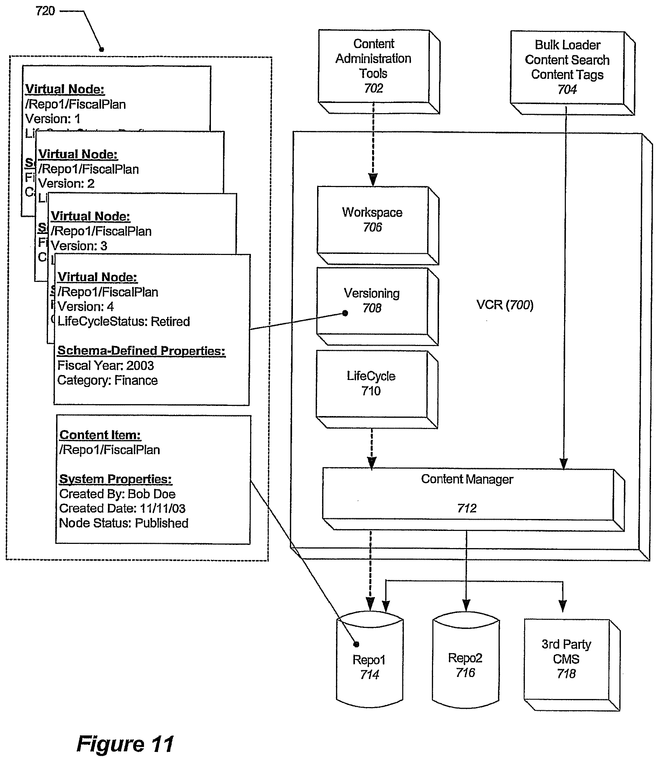

**Figure 11** is an exemplary illustration of retiring a node in the VCR while content services are enabled in accordance to various embodiments of the invention. Following from **Figure 10,** the node */Repo1/FiscalPlan* is again checked out by a user, which has the effect of de-publishing it and creating a new version (version 4) in the VCR, locking the new version, and assigning it to the user. Here, the user has changed the lifecycle status to "Retired." When the node is checked back in, the schema-defined properties are saved in the VCR to version 4 and the node is unlocked. In addition, the system removes (i.e. de-publishes) the node's schema-defined properties and its *Node Type* as found in *Repo1.*

Various embodiments may be implemented using a conventional general purpose or a specialized digital computer or microprocessor(s) programmed according to the teachings of the present disclosure, as will be apparent to those skilled in the computer art. Appropriate software coding can readily be prepared by skilled programmers based on the teachings of the present disclosure, as will be apparent to those skilled in the software art. The invention may also be implemented by the preparation of integrated circuits or by interconnecting an appropriate network of conventional component circuits, as will be readily apparent to those skilled in the art.

Various embodiments include a computer program product which is a storage medium (media) having instructions stored thereon/in which can be used to program a computing device to perform any of the features presented herein. The storage medium can include, but is not limited to, any type of physical media including floppy disks, optical discs, DVDs, CD-ROMs, microdrives, magnetooptical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data. Various embodiments include a computer program product that can be transmitted over one or more public and/or private networks wherein the transmission includes instructions which can be used to program a computing device to perform any of the features presented herein.

Stored on any one of the computer readable medium (media), the present invention includes software for controlling both the hardware of the general purpose/specialized computer or microprocessor, and for enabling the computer or microprocessor to interact with a human user or other mechanism utilizing the results of the present invention. Such software may include, but is not limited to, device drivers, operating systems, execution environments/containers, and applications.

The foregoing description of the preferred embodiments of the present invention has been provided for purposes of illustration and description. It is not intended to be exhaustive or to limit the invention to the precise forms disclosed. Many modifications and variations will be apparent to the practitioner skilled in the art. Embodiments were chosen and described in order to best explain the principles of the invention and its practical application, thereby enabling others skilled in the art to understand the invention, the various embodiments and with various modifications that are suited to the particular use contemplated. It is intended that the scope of the invention be defined by the following claims and their equivalents.

**Claims**

1. A method for providing one or more content services to a virtual content repository (VCR), said method comprising:

   integrating a plurality of repositories into the virtual content repository (VCR);
   maintaining a logical hierarchical namespace that encompasses the plurality of repositories, wherein said logical hierarchical namespace comprises a plurality of nodes, wherein a node can be a hierarchy node representing hierarchy information and serving as a container for other nodes in the namespace, a content node representing content information or a schema node representing schema information indicating a predetermined data type;
   providing a versioning capability and a lifecycle capability to the virtual content repository, the lifecycle capability providing for transitioning a content node through a set of states according to a lifecycle definition, and the versioning capability providing for maintaining a version history for the virtual content repository to track state changes to the content node, wherein the version history can be rolled back to restore a previous state of the content node;
   wherein the repository stores content information in one or more of the content nodes and schema information in one or more of the schema nodes; and
   wherein the content and schema information is accessible through the logical hierarchical namespace via an API which presents a unified view of the plurality of repositories.

2. The method of claim 1 wherein the integrating includes:
   implementing a service provider interface that is compatible with the VCR.

3. A system for providing one or more content services to a virtual content repository (VCR), said system comprising:

   a virtual content repository (VCR) including one or more content services;
   the plurality of repositories integrated into the VCR;
   a logical hierarchical namespace capable of encompassing the plurality of repositories, wherein said logical hierarchical namespace comprises a plurality of of nodes, wherein a node can be a hierarchy node representing hierarchy information and serving as a container for other nodes in the namespace, a content node representing content information or a schema node representing schema information indicating a predetermined data type;
   wherein a versioning capability and a lifecycle capability are provided to the virtual content repository, the lifecycle capability providing for transitioning a content node through a set of states according to a lifecycle definition, and the versioning capability providing for maintaining a version history for the virtual content repository to track state changes to the content node, wherein the version history can be rolled back to restore a previous state of the content node;
   wherein the repository stores content information in one or more of the content nodes and schema information in one or more of the schema nodes; and
   wherein the content and schema information is accessible through the logical hierarchical namespace via an API which presents a unified view of the plurality of repositories.

**4.** The system of claim 3 wherein the integrating includes:
implementing a service provider interface that is compatible with the VCR.

**Patentansprüche**

**1.** Verfahren zum Bereitstellen, einem virtuellen Inhaltsarchiv (VCR), eines oder mehrerer Inhaltsdienste, das Verfahren umfassend:

Integrieren einer Vielzahl von Archiven in das virtuelle Inhaltsarchiv (VCR);
Führen eines logischen hierarchischen Namensraums, der die Vielzahl von Archiven umschließt, wobei der logische hierarchische Namensraum eine Vielzahl von Knoten umfasst, wobei ein Knoten ein Hierarchieknoten, der Hierarchieinformationen repräsentiert und als ein Behälter für andere Knoten in dem Namensraum dient, ein Inhaltsknoten, der Inhaltsinformationen repräsentiert, oder ein Schemaknoten, der Schemainformationen repräsentiert, die einen im Voraus bestimmten Datentyp angeben, sein kann;
Bereitstellen, dem virtuellen Inhaltsarchiv, einer Versionierungsfähigkeit und einer Lebenszyklusfähigkeit, wobei die Lebenszyklusfähigkeit das Durchlaufen eines Inhaltsknotens durch einen Satz von Zuständen gemäß einer Lebenszyklusdefinition bereitstellt und die Versionierungsfähigkeit das Führen einer Versionshistorie für das virtuelle Inhaltsarchiv zum Verfolgen von Zustandsänderungen dem Inhaltsknoten bereitstellt, wobei die Versionshistorie zurückgeführt werden kann, um einen vorherigen Zustand des Inhaltsknotens wiederherzustellen;
wobei das Archiv Inhaltsinformationen in einem oder mehreren der Inhaltsknoten und Schemainformationen in einem oder mehreren der Schemaknoten speichert; und
wobei die Inhalts- und Schemainformationen durch den logischen hierarchischen Namensraum über eine API, die eine vereinheitlichte Ansicht der Vielzahl von Archiven präsentiert, zugänglich ist.

**2.** Verfahren nach Anspruch 1, wobei das Integrieren enthält:
Implementieren einer Dienstanbieterschnittstelle, die mit dem VCR kompatibel ist.

**3.** System zum Bereitstellen, einem virtuellen Inhaltsarchiv (VCR), eines oder mehrerer Inhaltsdienste, das System umfassend:

ein virtuelles Inhaltsarchiv (VCR), das einen oder mehrere Inhaltsdienste enthält;
die Vielzahl von in das VCR integrierten Archiven;
einen logischen hierarchischen Namensraums, der imstande ist, die Vielzahl von Archiven zu umschließen, wobei der logische hierarchische Namensraum eine Vielzahl von Knoten umfasst, wobei ein Knoten ein Hierarchieknoten, der Hierarchieinformationen repräsentiert und als ein Behälter für andere Knoten in dem Namensraum dient, ein Inhaltsknoten, der Inhaltsinformationen repräsentiert, oder ein Schemaknoten, der Schemainformationen repräsentiert, die einen im Voraus bestimmten Datentyp angeben, sein kann;
wobei dem virtuellen Inhaltsarchiv eine Versionierungsfähigkeit und eine Lebenszyklusfähigkeit bereitgestellt werden, wobei die Lebenszyklusfähigkeit das Durchlaufen eines Inhaltsknotens durch einen Satz von Zuständen gemäß einer Lebenszyklusdefinition bereitstellt und die Versionierungsfähigkeit das Führen einer Versionshistorie für das virtuelle Inhaltsarchiv zum Verfolgen von Zustandsänderungen dem Inhaltsknoten bereitstellt, wobei die Versionshistorie zurückgeführt werden kann, um einen vorherigen Zustand des Inhaltsknotens wiederherzustellen;
wobei das Archiv Inhaltsinformationen in einem oder mehreren der Inhaltsknoten und Schemainformationen in einem oder mehreren der Schemaknoten speichert; und
wobei die Inhalts- und Schemainformationen durch den logischen hierarchischen Namensraum über eine API, die eine vereinheitlichte Ansicht der Vielzahl von Archiven präsentiert, zugänglich ist.

**4.** System nach Anspruch 3, wobei das Integrieren enthält:
Implementieren einer Dienstanbieterschnittstelle, die mit dem VCR kompatibel ist.

**Revendications**

**1.** Procédé de fourniture d'un ou de plusieurs services de contenu à un référentiel de contenu virtuel (VCR), ledit procédé comprenant:

l'intégration d'une pluralité de référentiels dans le référentiel de contenu virtuel (VCR) ;

la tenue à jour d'un espace de noms hiérarchique logique qui englobe la pluralité de référentiels, ledit espace de noms hiérarchique logique comprenant une pluralité de nœuds, un nœud pouvant être un nœud hiérarchique représentant des informations hiérarchiques et servant de contenant pour d'autres nœuds dans l'espace de noms, un nœud de contenu représentant des informations de contenu ou un nœud de schéma représentant des informations de schéma indiquant un type de données prédéterminé ;

la fourniture d'une capabilité de définition de version et d'une capabilité de cycle de vie au référentiel de contenu virtuel, la capabilité de cycle de vie permettant une transition d'un nœud de contenu par un ensemble d'états conformément à une définition de cycle de vie, et la capabilité de définition de version permettant la tenue à jour d'un historique des versions du référentiel de contenu virtuel pour suivre les changements d'état du nœud de contenu, l'historique de versions pouvant être ramené en arrière pour rétablir un état antérieur du nœud de contenu ;

dans lequel le référentiel stocke des informations de contenu dans un ou plusieurs des nœuds de contenu et des informations de schéma dans un ou plusieurs des nœuds de schéma ; et

dans lequel les informations de contenu et de schéma sont accessibles par le biais de l'espace de noms hiérarchique logique par l'intermédiaire d'une API qui présente une vue unifiée de la pluralité de référentiels.

2. Procédé selon la revendication 1 dans lequel l'intégration comporte :
la mise en œuvre d'une interface de fournisseur de services compatible avec le VCR.

3. Système de fourniture d'un ou de plusieurs services de contenu à un référentiel de contenu virtuel (VCR), ledit système comprenant :

un référentiel de contenu virtuel (VCR) comportant un ou plusieurs services de contenu ;

la pluralité de référentiels intégrés dans le VCR ;

un espace de noms hiérarchique logique capable d'englober la pluralité de référentiels, ledit espace de noms hiérarchique logique comprenant une pluralité de nœuds, un nœud pouvant être un nœud hiérarchique représentant des informations hiérarchiques et servant de contenant pour d'autres nœuds dans l'espace de noms, un nœud de contenu représentant des informations de contenu ou un nœud de schéma représentant des informations de schéma indiquant un type de données prédéterminé ;

dans lequel une capabilité de définition de version et une capabilité de cycle de vie sont fournies au référentiel de contenu virtuel, la capabilité de cycle de vie permettant une transition d'un nœud de contenu par un ensemble d'états conformément à une définition de cycle de vie, et la capabilité de définition de version permettant la tenue à jour d'un historique des versions du référentiel de contenu virtuel pour suivre les changements d'état du nœud de contenu, l'historique de versions pouvant être ramené en arrière pour rétablir un état antérieur du nœud de contenu ;

dans lequel le référentiel stocke des informations de contenu dans un ou plusieurs des nœuds de contenu et des informations de schéma dans un ou plusieurs des nœuds de schéma ; et

dans lequel les informations de contenu et de schéma sont accessibles par le biais de l'espace de noms hiérarchique logique par l'intermédiaire d'une API qui présente une vue unifiée de la pluralité de référentiels.

4. Système selon la revendication 3 dans lequel l'intégration comporte :
la mise en œuvre d'une interface de fournisseur de services compatible avec le VCR.

| Content Mining | Processes/ Threads | Tag Libraries | IDE | Other Libraries |
|---|---|---|---|---|
| API | | | | |
| SPI | | | Configuration | Cache(s) |
| Repository | Repository | Repository | | |

**Figure 1**

*Figure 2*

302 — lifecycleFive

304 — Client Request

306 —

308 — Control CM Lifecycle

310 — Control Notification

While Do

312 — Finish

300

**Figure 3**

◇ **VCR (400)**

    *Neptune (402)*

        ☐ **Press Releases (404)**

            🔒 ▤ Japan Account *(406)*

        ☐ **Old Schemas (408)**

            ▤ Account Schema (410)

    *Pluto (412)*

        ▤ **Internal Memo Schema (414)**

        ▤ **2003 Memos (416)**

        ☐ **2004 Memos (418)**

            ☐ Marketing (Region 1) (420)

            ▤ Clients (422)

            🔒 ▤ Client Intake Protocol (424)

    *Public (426)*

        ▤ **Press Release (428)**

        ▤ **Translated PR (430)**

        ☐ **Internal Memos (432)**

            🔒 ▤ Staff Change (434)

☐ **My Workspace (436)**

    ▤ *Letter to John (438)*

    ▤ *My client reminder schema (440)*

    *Assigned Items (442)*

        ▤ **Japan Account (444)**

        ▤ **Internal Memo Schema (446)**

*Figure 4*

*Figure 5*

**Figure 6**

Content
Administration
Tools
*702*

Bulk Loader
Content Search
Content Tags
*704*

Workspace
*706*

Versioning
*708*

VCR (*700*)

LifeCycle
*710*

Content Manager

*712*

720 ——

**Content Item:**
/Repo1/FiscalPlan

**System Properties:**
Created By: Bob Doe
Created Date: 11/11/03
Node Status: Published
Node Type: FiscalPlanType

**Schema-Defined Properties:**
Fiscal Year: 2003
Category: Finance

Repo1
*714*

Repo2
*716*

3rd Party
CMS
*718*

## Figure 7

Figure 8

**Figure 9**

**Figure 10**

720

**Virtual Node:**
/Repo1/FiscalPlan
Version: 1

**Virtual Node:**
/Repo1/FiscalPlan
Version: 2

**Virtual Node:**
/Repo1/FiscalPlan
Version: 3

**Virtual Node:**
/Repo1/FiscalPlan
Version: 4
LifeCycleStatus: Retired

**Schema-Defined Properties:**
Fiscal Year: 2003
Category: Finance

**Content Item:**
/Repo1/FiscalPlan

**System Properties:**
Created By: Bob Doe
Created Date: 11/11/03
Node Status: Published

Content
Administration
Tools
702

Bulk Loader
Content Search
Content Tags
704

Workspace
706

Versioning
708

VCR (700)

LifeCycle
710

Content Manager

712

Repo1
714

Repo2
716

3rd Party
CMS
718

*Figure 11*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Version propagation in federated database systems. **SCHONHOFF M et al.** DATABASE ENGINEERING & APPLICATIONS, 2001 INTERNATIONAL SYMPOSIUM ON. IEEE, 16 July 2001, 189-198